# FASCICULE DE BREVET EUROPEEN

(11) **EP 1 238 340 B1**
(45) Date de publication et mention de la délivrance du brevet: **03.03.2004**
(21) Numéro de dépôt: 00988928.8
(22) Date de dépôt: 15.12.2000
(51) Int. Cl.: G06F 1/00

(54) **DISPOSITIF INFORMATIQUE POUR L'APPLICATION DE DONNEES ACCREDITIVES A UN LOGICIEL OU A UN SERVICE**
INFORMATIKVORRICHTUNG ZUR ANWENDUNG VON AKKREDTIERUNGSDATEN AUF EINE SOFTWARE ODER AUF EINEN DIENST
COMPUTERISED DEVICE FOR APPLYING ACCREDITATION DATA TO A SOFTWARE OR A SERVICE

(30) Priorité: 17.12.1999 FR 9915979
(43) Date de publication de la demande: 11.09.2002
(73) Titulaire: ACTIVCARD IRELAND LIMITED, Dublin 2 (IE)
(72) Inventeur: AUDEBERT, Yves, Los Gatos, CA 95032 (US)
(74) Mandataire: Colas, Jean-Pierre
(86) Numéro de dépôt international: PCT/FR2000/003550
(87) Numéro de publication internationale: WO 2001/044949

(56) Documents cités:
- FR-A- 2 676 291
- FR-A- 2 740 885
- US-A- 5 887 065
- LUCKHARDT N: "PASSWORT PORTFOLIO" CT MAGAZIN FUER COMPUTER TECHNIK,DE,VERLAG HEINZ HEISE GMBH., HANNOVER, no. 13, 21 juin 1999 (1999-06-21), page 72 XP000828972 ISSN: 0724-8679

## Description

L'invention a pour objet un dispositif informatique du type dans lequel l'exécution d'un logiciel ou l'accès à un service ou à un logiciel est commandé par l'application d'au moins une donnée accréditive propre à un utilisateur.

L'accès à de nombreux logiciels tels que des systèmes d'exploitation, des logiciels d'application, par exemple pour le courrier électronique, le commerce électronique, la banque à domicile, etc... nécessite une authentification de l'utilisateur vis-à-vis du logiciel considéré. Généralement, lorsqu'un utilisateur lance sur un terminal, tel qu'un ordinateur personnel, un logiciel nécessitant une authentification, celui-ci affiche sur l'écran du terminal une boîte de dialogue comprenant deux champs destinés, l'un à l'introduction du nom de l'utilisateur, l'autre à celui de son mot de passe. Ces données accréditives propres à l'utilisateur et au logiciel considéré sont introduites par l'utilisateur au moyen du clavier dont est équipé le terminal.

Le plus souvent, les utilisateurs utilisent plusieurs logiciels d'application et ils doivent donc se remémorer autant de noms d'utilisateurs et de mots de passe. Cette contrainte conduit fréquemment les utilisateurs à noter par écrit ces données accréditives et compromet donc les mécanismes de sécurité mis en oeuvre si les données notées viennent à être connues illicitement par un tiers. De plus, afin de pouvoir être mémorisés par les utilisateurs, les mots de passe qui leur sont attribués sont généralement courts et n'offrent qu'une résistance limitée à des attaques.

Les logiciels à accès par authentification dont il est question dans la présente demande peuvent être des logiciels qui, soit sont exécutés localement sur un terminal tel qu'un ordinateur personnel, soit sont exécutés pour partie dans ce terminal et pour partie dans un serveur auquel le terminal peut être connecté par un réseau de communication tel qu'Intemet. Les logiciels visés sont principalement les logiciels d'application permettant de mettre en oeuvre des opérations du type précité (courrier électronique, banque à domicile, commerce électronique, etc...). Dans certains cas, ces logiciels d'application permettent d'exécuter des transactions financières et on conçoit que le maintien du secret des données accréditives permettant leur accès soit essentiel.

Afin d'améliorer les conditions de sécurité du processus d'authentification vis à vis d'applications, il est connu de faire appel à des serveurs de mots de passe. Lorsqu'un utilisateur veut accéder à une application à partir d'un terminal, il doit se connecter au serveur de mot de passe et s'authentifier vis à vis de ce dernier. Le serveur de mot de passe, qui contient les données accréditives de l'utilisateur, se substitue à l'utilisateur pour charger les données accréditives voulues dans l'application à laquelle l'utilisateur demande un accès et démarrer celle-ci. Avec cette solution, les données accréditives peuvent rester inconnues de l'utilisateur, à l'exception toutefois de celles lui permettant de s'authentifier vis à vis du serveur de mot de passe. Cette solution implique cependant l'existence d'un serveur spécifique et nécessite une connexion en temps réel à ce dernier au moment où l'utilisateur veut accéder à une application.

Par ailleurs, en dehors des questions liées à l'accès proprement dit à des logiciels, l'accès à de nombreux services, par exemple pour la mise en oeuvre de transactions financières ou l'achat paiement de produits sur Intemet par exemple, nécessite d'y introduire des données accréditives, secrètes ou non, telles que numéro de carte de crédit et date d'expiration, numéro de compte bancaire, etc. La saisie de ces données accréditives par un utilisateur via le clavier, ou similaire, d'un dispositif informatique est une source d'erreur et de complication, et s'avère nuisible à la sécurité si les données accréditives sont secrètes.

On connaît par l'article de LUCKHARDT N., « PASSWORT PORTFOLIO » in c't MAGAZIN FUER COMPUTER TECHNIK, (VERLAG HEINZ HEISE GMBH., HANNOVER, no. 13, 21 juin 1999 (1999-06-21), page 72 XP000828972 ISSN : 0724-8679) un dispositif informatique associé à une carte à puce pour stocker et appliquer des données accréditives à une application ou un service. Ce dispositif informatique comprend :
- des moyens de traitement de données pour la mise en oeuvre d'au moins l'une des fonctions comprenant l'accès à un logiciel, l'exécution d'un logiciel et l'accès à un service,
- des premiers moyens de mémorisation de données et de programmes,
- des moyens d'interface avec un utilisateur comportant au moins un écran d'affichage et des moyens d'interface graphique, la mise en oeuvre de ladite fonction requérant l'application d'au moins une donnée accréditive en réponse à l'affichage d'une requête sur ledit écran,
- un dispositif de sécurité personnel comportant des moyens de fourniture pour la délivrance de ladite donnée accréditive,
- et des moyens de pilotage de ladite fonction comportant des moyens d'affichage pour afficher ladite requête sur ledit écran.

Le document FR 2 676 291 décrit l'utilisation d'une carte à puce connectée par un lecteur à un système informatique afin de stocker des clés d'accès et d'appliquer celles-ci à des programmes d'application. Ce document vise essentiellement un mécanisme permettant de stocker sous forme chiffrée sur une disquette ou le disque dur du système informatique les données de sécurité contenues dans la carte : le but est de permettre la reprise d'exploitation des programmes par un utilisateur en cas de perte de la carte

L'invention vise à fournir un dispositif informatique permettant d'améliorer sensiblement l'ergonomie et la sécurité du processus d'application de données accréditives à un logiciel ou service exécutable par ledit dispositif.

L'invention vise également à fournir un dispositif informatique permettant de faciliter le processus d'authentification d'un utilisateur vis-à-vis d'un ou plusieurs logiciels ou services dont l'accès est commandé par l'application d'au moins une donnée accréditive spécifique à l'utilisateur et au logiciel ou service considérés, en évitant à l'utilisateur d'avoir à se remémorer la ou les données accréditives associées à ce ou ces logiciels ou services, ou de faire appel à un serveur de mot de passe.

Elle vise aussi à fournir un dispositif informatique permettant de faciliter l'application de données de paiement lors d'opérations d'achat a distance en évitant à l'utilisateur d'avoir à se remémorer par exemple le numéro et la date d'expiration de sa carte de paiement ou son numéro de compte bancaire.

Un autre but de l'invention est de fournir un dispositif informatique qui permette d'améliorer sensiblement la sécurité d'un tel processus d'application de données accréditives à un logiciel ou un service.

A cet effet, l'invention a pour objet un dispositif informatique tel que défini dans la revendication 1.

Le dispositif informatique selon l'invention ne nécessite pas l'introduction manuelle par l'utilisateur de sa ou ses données accréditives, qui sont automatiquement transférées au moyen de l'organe de pointage du dispositif de sécurité personnel au logiciel auquel l'utilisateur veut accéder. Du fait que le dispositif de sécurité personnel à l'utilisateur, de type matériel (carte à puce, jeton- en anglais "token") ou logiciel, permet de stocker des mots de passe forts (mots de passe longs et complexes), le dispositif informatique selon l'invention procure des conditions de sécurité sensiblement améliorées pour l'accès à un ou des logiciels.

Le développement des applications et services accessibles par Internet a indirectement créé une prolifération de virus dont un des objectifs est de lire les mots de passe ou numéros de carte de crédit que les utilisateurs stockent sur leur ordinateur personnel (PC) pour éviter d'avoir à les ressaisisr à chaque utilisation. Le dispositif selon l'invention procure donc aussi une amélioration de la sécurité dans la mesure où lesdites données accréditives sont protégées par le dispositif personnel de sécurité de l'utilisateur et, en conséquence, ne sont pas stockées en clair sur le PC.

Aucune connexion en temps réel à un serveur de mot de passe contenant les données accréditives d'un ensemble d'utilisateurs n'est nécessaire, car les données accréditives propres à chaque utilisateur sont stockées dans le dispositif de sécurité qui lui est personnel et qui est associé au terminal à partir duquel il demande un accès à une application. Néanmoins, s'il existe un tel serveur de mot de passe, le dispositif informatique selon l'invention peut être utilisé pour améliorer la sécurité du processus d'authentification vis à vis de ce serveur : les données accréditives commandant l'accès à ce serveur sont alors gérées comme décrit ci-dessus.

Les données accréditives auxquelles il est fait référence peuvent être des mots de passe statiques ou dynamiques. Dans le cas de données accréditives statiques, les moyens de fourniture desdites données sont en fait des moyens de mémorisation. Dans le cas de données accréditives dynamiques, les moyens de fourniture sont des moyens de calcul permettant l'exécution d'un algorithme. Les données accréditives dynamiques sont alors calculées à l'aide de variable temporelle du type "compteur d'événement", d'une clé, elle-même statique ou dynamique, et d'un algorithme exécuté dans la carte à puce ou le jeton (token) matériel ou logiciel.

Suivant une caractéristique de l'invention, dans le cas où ledit logiciel est du type à affichage par fenêtres et comprend une fenêtre de destination pour l'application de ladite donnée accréditive, lesdits moyens de pilotage d'accès comprennent en outre :
- des premiers moyens d'identification de données caractéristiques de la fenêtre se trouvant sous ledit curseur au cours de son déplacement sur ledit écran,
- des premiers moyens de comparaison pour comparer les données caractéristiques de ladite fenêtre se trouvant sous le curseur avec des données caractéristiques de ladite fenêtre de destination stockées dans lesdits moyens de fourniture en liaison avec ladite donnée accréditive, et
- des moyens pour autoriser ladite application de ladite donnée accréditive en réponse à une cohérence entre lesdites données caractéristiques identifiées et lesdites données caractéristiques stockées dans lesdits moyens de fourniture.

Selon une forme de réalisation de l'invention, dans le cas où ledit dispositif comprend plusieurs logiciels et plusieurs données accréditives distinctes commandant respectivement l'accès auxdits logiciels, à chacune desdites données accréditives est associée dans lesdits moyens de fourniture une donnée d'identification du logiciel correspondant, lesdits moyens d'affichage sont adaptés pour afficher sur ledit écran une pluralités de signes représentatifs respectivement desdites données accréditives, et lesdits moyens de pilotage d'accès comprennent en outre des seconds moyens d'identification d'un logiciel dont ladite fenêtre de destination est affichée sur ledit écran, et des seconds moyens de comparaison pour comparer l'identité dudit logiciel identifié avec la donnée d'identification associée à une donnée accréditive sélectionnée au moyen dudit organe de pointage, lesdits moyens de comparaison n'autorisant l'application audit logiciel identifié de ladite donnée accréditive sélectionnée que s'il y a identité dudit logiciel identifié avec ladite donnée d'identification.

Selon une variante de réalisation de l'invention, dans le cas où le dispositif comprend plusieurs logiciels et plusieurs données accréditives distinctes commandant respectivement l'accès auxdits logiciels, à chacune desdites données accréditives est associée dans lesdits moyens de fourniture une donnée d'identification du logiciel correspondant et lesdits moyens de pilotage d'accès comprennent en outre des seconds moyens d'identification d'un logiciel dont ladite fenêtre de destination est affichée sur ledit écran, des seconds moyens de comparaison pour comparer l'identité dudit logiciel identifié avec lesdites données d'identification stockées dans lesdits moyens de fourniture, lesdits moyens d'application étant adaptés pour commander l'application dans ladite fenêtre de destination d'une donnée accréditive présente dans lesdits moyens de fourniture et dont la donnée d'identification associée correspond à l'identité dudit logiciel détecté. Selon cette variante de réalisation, le processus d'authentification est automatisé dans la mesure où l'utilisateur n'a pas à choisir la donnée accréditive affectée au logiciel auquel il doit avoir accès, à condition que cette donnée accréditive soit bien disponible dans le dispositif de sécurité personnel.

De préférence, le dispositif comprend des moyens pour, en l'absence d'une correspondance entre lesdites données d'identification et ledit logiciel détecté, autoriser l'introduction par ledit utilisateur, via lesdits moyens d'interface, d'une donnée accréditive pour ledit logiciel détecté et stocker dans lesdits moyens de fourniture ladite donnée accréditive introduite avec des données d'identification dudit logiciel détecté.

De préférence, le dispositif informatique selon l'invention comprend en outre une ou plusieurs des caractéristiques suivantes considérées seules ou en combinaison :
- le dispositif comprend un ordinateur personnel auquel est connecté ledit dispositif personnel de sécurité ;
- ledit logiciel est un logiciel d'application réparti entre l'ordinateur personnel et un serveur, ledit dispositif comportant des moyens de connexion dudit ordinateur personnel audit serveur ;
- ledit dispositif de sécurité personnel est une carte à puce ;
- ledit dispositif de sécurité personnel comprend des moyens de comparaison d'un code secret mémorisé avec un code secret introduit par l'utilisateur via lesdits moyens d'interface, lesdits moyens de pilotage d'accès étant rendus opérationnels en réponse à une cohérence entre lesdits codes secrets ;
- lesdits moyens de pilotage d'accès comprennent des moyens pour interdire l'affichage de ladite donnée accréditive sur ledit écran d'affichage en réponse à son application audit logiciel.

Grâce en particulier à cette dernière caractéristique, le processus d'authentification peut être mis en oeuvre sans que la donnée accréditive soit connue de l'utilisateur, ce qui améliore sensiblement les conditions de sécurité puisque cette donnée accréditive ne peut pas être divulguée accidentellement par l'utilisateur.

Lorsque la donnée accréditive est statique, les moyens de fourniture sont des moyens de mémorisation. Si la donnée accréditive est dynamique, les moyens de fourniture comprennent des moyens d'exécution d'un algorithme de calcul de ladite donnée accréditive.

D'autres caractéristiques et avantages de l'invention résulteront de la description qui va suivre, faite en se référant aux dessins annexés sur lesquels :
La figure 1 est une vue schématique illustrant des éléments matériels et logiciels du dispositif informatique selon l'invention ;
La figure 2 A est une vue d'un écran d'affichage illustrant le processus d'authentification vis-à-vis d'un logiciel au moyen du dispositif selon l'invention;
La figure 2B est une vue à plus grande échelle d'un icône affiché sur l'écran de la figure 2A;
La figure 3 est un organigramme illustrant les fonctions de base mises en oeuvre par le logiciel de "glissé-lâché" utilisé dans le dispositif selon l'invention ;
La figure 4 est un organigramme plus détaillé illustrant un premier sous-programme du logiciel illustré par l'organigramme de la figure 3 ;
La figure 5 est un organigramme plus détaillé illustrant un second sous-programme du logiciel illustré par l'organigramme de la figure 3 ;
La figure 6 est une représentation schématique d'une page d'accueil d'un logiciel d'application affiché à un utilisateur en vue de l'introduction de son mot de passe.

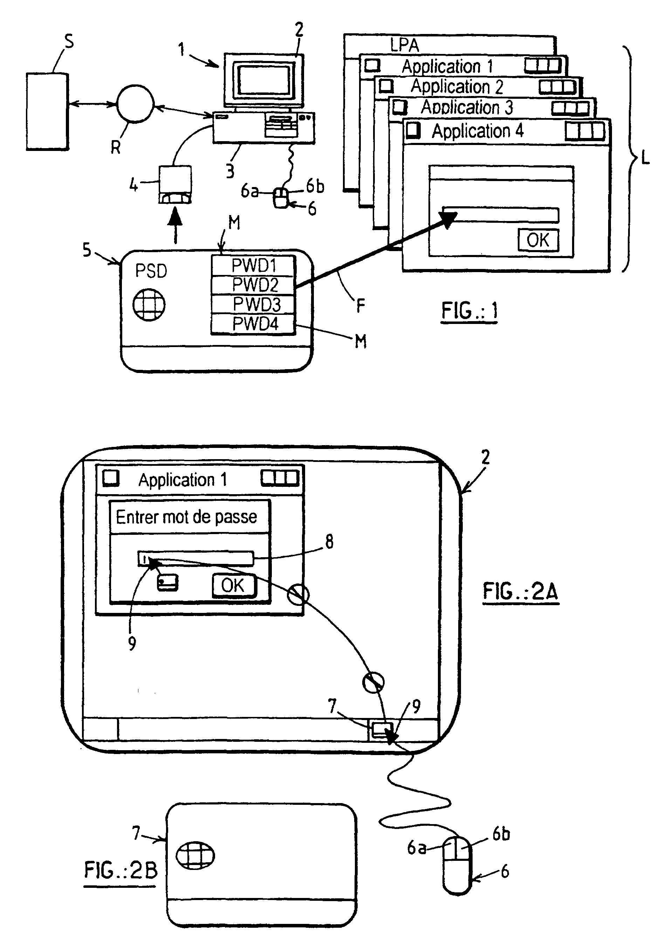

En se reportant à la figure 1, un ordinateur personnel 1 comporte un écran d'affichage 2 et un ensemble de moyens conventionnels de traitement de données (microprocesseur), de mémorisation de données, d'entrée/sortie, etc... et désignés dans leur ensemble par la référence 3. Pour la simplicité du dessin, le clavier de l'ordinateur personnel 1 n'a pas été représenté.

A l'ordinateur personnel 1 est associé un dispositif de sécurité personnel PSD tel qu'une carte à puce 5 susceptible d'être lue au moyen d'un dispositif de lecture ou lecteur 4 connecté à l'ordinateur personnel 1. En variante, le lecteur peut être intégré à l'ordinateur personnel 1.

De manière conventionnelle, un organe de pointage, tel qu'une souris 6 dotée de boutons gauche 6a et droit 6b, est connecté à l'ordinateur personnel 1 pour permettre de déplacer un curseur sur l'écran 2.

L'ordinateur personnel 1 est adapté pour exécuter un certain nombre de logiciels L, en particulier des logiciels d'application illustrés sur la figure 1 par une page d'accueil portant le nom de l'application, à savoir Application 1, Application 2, Application 3 et Application 4, ainsi qu'un logiciel LPA de pilotage d'accès assurant la gestion des accès aux logiciels d'application comme cela sera décrit dans la suite. Ces logiciels d'application (également appelés application dans la suite) peuvent être des logiciels exécutés localement dans l'ordinateur personnel 1, ou pour partie dans celui-ci et pour partie dans un serveur S auquel l'ordinateur personnel 1 peut être connecté par un réseau de communication R tel qu'Internet, dans le cadre d'une architecture client-serveur.

L'accès d'un utilisateur de l'ordinateur personnel 1 à l'une quelconque des applications 1, 2, 3 et 4 est subordonné à l'introduction de données accréditives qui sont attribuées à l'utilisateur pour l'autoriser à utiliser l'application considérée. Ces données accréditives comprennent généralement un nom d'utilisateur et un mot de passe qui sont spécifiques à l'application et à l'utilisateur considérés. Dans la suite, pour la simplicité de la description, seule la donnée accréditive que constitue le mot de passe PWD sera considérée. C'est ainsi que des mots de passe PWD1, PWD2, PWD3, PWD4 devront être introduits dans l'ordinateur personnel 1 pour accéder aux applications 1, 2, 3 et 4 respectivement.

Dans un dispositif conventionnel, l'utilisateur est invité par une boîte de dialogue à entrer son mot de passe au clavier et les différents caractères tapés s'affichent en clair ou sous forme banalisée (par exemple une succession d'astérisques) dans une fenêtre spécifique.

Dans le dispositif selon l'invention, les différentes données accréditives, et en particulier les mots de passe PWD1, PWD2, PWD3, PWD4 pour les applications 1 à 4, sont fournies à l'ordinateur personnel 1 par le dispositif de sécurité personnel 5. Comme indiqué précédemment, les données accréditives, telles que les mots de passe, peuvent être statiques ou dynamiques.

Au sens de la présente demande, un dispositif de sécurité personnel PSD est un dispositif détenu et/ou accessible (par exemple par code PIN d'identification personnel ou autre) exclusivement par un utilisateur autorisé, et permettant d'y stocker de manière sécurisée des données en offrant des garanties de sécurité contre la lecture et/ou l'écriture de données par une personne non autorisée. En outre, un tel dispositif de sécurité personnel PSD peut être doté de moyens de calcul pour l'exécution d'un ou plusieurs algorithmes, notamment en vue de générer des données accréditives dynamiques.

Comme dans les modes de réalisation décrits, le dispositif de sécurité personnel PSD peut être une carte à puce 5, susceptible d'être connectée à l'ordinateur personnel 1 par le lecteur 4 et dotée de moyens de sécurisation matériels et logiciels permettant d'y stocker des secrets (codes, messages, clés, programmes, etc...) Son utilisation est généralement subordonnée à la fourniture d'un code d'identification personnel PIN. Généralement, une carte à puce ne comporte pas de source d'énergie électrique et ses circuits électroniques ne peuvent être rendus actifs que lorsqu'elle est introduite dans un lecteur susceptible de l'alimenter électriquement

D'autres dispositifs de sécurité personnels bien connus et basés sur des mécanismes de sécurité quelque peu différents sont au contraire dotés d'une source d'énergie électrique intégrée et peuvent être utilisés à des fins d'authentification vis-à-vis d'un ordinateur personnel, d'un système informatique, etc... De tels dispositifs de sécurité personnels, généralement portables, sont également appelés "jetons" (token en langue anglaise).

En variante, le dispositif de sécurité personnel PSD peut être réalisé sous forme d'un logiciel implanté dans l'ordinateur personnel 1 et permettant d'y stocker des données de manière sécurisée, ces données pouvant éventuellement être chiffrées.

Il doit être entendu que l'invention décrite dans la présente demande n'est pas limitée à l'utilisation comme dispositif de sécurité personnel d'une carte à puce 5, mais que celui-ci pourrait tout aussi bien être un "jeton" susceptible de communiquer avec l'ordinateur personnel 1 par des moyens de transmission bidirectionnels, un dispositif de sécurité personnel de forme purement logicielle installé sur l'ordinateur personnel 1, ou tout autre dispositif propre à un utilisateur (dont l'accès est généralement commandé par un code d'identification personnel PIN connu de l'utilisateur) permettant de stocker des secrets de manière sécurisée et éventuellement d'exécuter les algorithmes de calcul dans le cas de données accréditives dynamiques..

Les données accréditives, ou les secrets permettant de calculer celles-ci dans le cas de mots de passe dynamiques, sont stockées dans différents segments d'une mémoire M du dispositif personnel de sécurité et leur nombre n'est limité que par la mémoire de ce dispositif. D'autres limitations peuvent tenir à la capacité du dispositif PSD à exécuter des algorithmes de calcul.

Dans la suite, pour la simplicité de la description, le dispositif de sécurité personnel considéré est une carte à puce 5 et les mots de passe PWD1, PWD2, PWD3, PWD4 fournis par celle-ci sont statiques (mots de passe stockés) ou dynamiques (mots de passe calculés).

Les différents mots de passe PWD1, PWD2, PWD3, PWD4 fournis par la carte à puce 5 sont associés aux caractéristiques de la fenêtre dans laquelle ces mots de passe sont destinés à être introduits, en l'espèce la classe et les attributs de cette fenêtre.

Le processus qui, comme l'illustre la flèche F en traits pointillés de la figure 1, permet d'introduire dans la fenêtre requise de l'une des applications 1 à 4 le mot de passe correspondant fourni par la carte à puce 5, sera mieux compris en se reportant également aux figures 2A et 2B.

Ce processus repose sur l'utilisation de fonctions d'interface graphique du type "glissé-lâché" ( Drag and Drop en anglais). Le "Drag and Drop" est un procédé d'interface utilisateur graphique (GUI) utilisé pour transférer des données entre deux applications. La souris de l'ordinateur personnel est utilisée pour extraire des données d'une application et les insérer dans une autre application. Par exemple, il est possible de sélectionner sous forme de bloc un texte à l'intérieur d'un programme de traitement de texte. En amenant, au moyen de la souris, le curseur sur le bloc de texte sélectionné, puis en enfonçant et en maintenant enfoncé le bouton de la souris tout en déplaçant celle-ci de manière à amener le curseur à l'endroit voulu d'une autre application, ce texte se trouve inséré dans l'autre application par simple relâchement du bouton de la souris. Le processus de "Drag and Drop" implique donc une source, à savoir une application dans laquelle des données seront extraites, et une cible dans laquelle ces données seront insérées.

Dans le dispositif selon l'invention, la source est le logiciel de pilotage d'accès LPA adapté pour afficher en permanence un icône 7 se présentant, par exemple, comme représenté à la figure 2B, sous la forme d'une représentation de carte à puce. Cet icône 7 est affiché et disponible en permanence sur l'écran d'affichage 2, par exemple à la partie inférieure droite de celui-ci, car le logiciel de pilotage d'accès LPA est une application résidente, c'est-à-dire une application qui est exécutée continuellement en arrière-plan et qui est démarrée automatiquement à chaque fois que l'utilisateur se connecte à son ordinateur personnel 1.

La cible est constituée par la fenêtre 8 d'insertion du mot de passe de la page d'accueil de l'application à laquelle un accès est recherché. La plupart des logiciels d'application récents pour ordinateurs personnels pourvus d'une interface utilisateur graphique par fenêtrage disposent en effet d'une boîte de dialogue pourvue de champs ou fenêtres permettant à l'utilisateur d'introduire sa ou ses données accréditives. Cependant, le dispositif selon l'invention n'est pas limité à ce type de logiciels d'application et peut être utilisé avec des logiciels d'application plus anciens qui fonctionnent sans fenêtrage, en mode texte, et invitent simplement l'utilisateur à introduire sa ou ses données accréditives.

Lorsqu'il veut se connecter à l'une des applications 1 à 4, par exemple à l'application 1 comme représenté à la figure 2A, l'utilisateur amène, au moyen de la souris 6, le curseur 9 sur l'icône 7.

Selon un premier exemple de réalisation de l'invention, l'utilisateur choisit, au moyen d'un menu, celui des mots de passe PWD1, PWD2, PWD3, PWD4 qui correspond à l'application affichée. Il doit être bien compris que les mots de passe PWD1, PWD2, PWD3, PWD4 ne sont pas affichés en clair dans ce menu et que seuls y apparaissent des codes, messages ou signes P1, P2, P3, P4 permettant de les identifier et de savoir à quelle application chacun permet de donner accès.

Par exemple, un bref enfoncement du bouton droit 6b de la souris, lorsque le curseur 9 est sur l'icône 7, provoque l'affichage d'une liste des codes P1, P2, P3, P4 d'identification des mots de passe. Le mot de passe voulu, par exemple PWD1, est sélectionné en positionnant le curseur 9 sur le code correspondant P1 de la liste et en cliquant sur le bouton droit 6b de la souris, après quoi l'icône 7 est à nouveau affiché. Le mot de passe PWD1 se trouve ainsi sélectionné par défaut et sera automatiquement utilisé lors des processus ultérieurs d'authentification par "glissé-lâché" (Drag and Drop), tant que l'utilisateur n'aura pas sélectionné un autre mot de passe au moyen du menu.

Une fois qu'un mot de passe a été sélectionné, le curseur 9 étant sur l'icône 7, l'utilisateur enfonce le bouton gauche 6a de la souris et, tout en maintenant celui-ci enfoncé, déplace le curseur 9 au moyen de la souris 6 vers la fenêtre 8 de destination. Au cours de ce déplacement, le logiciel de pilotage d'accès LPA modifie la représentation graphique du curseur 9 tant que celui-ci n'est pas arrivé dans la fenêtre de destination : comme le montre la figure 2A, pendant son déplacement jusqu'à la fenêtre 8, le curseur 9 est représenté sous la forme d'un cercle barré diamétralement. Une fois que le curseur 9 est arrivé à la fenêtre 8 de destination, il reprend sa forme initiale de flèche qui signifie à l'utilisateur qu'il peut relâcher le bouton gauche 6a de la souris 6.

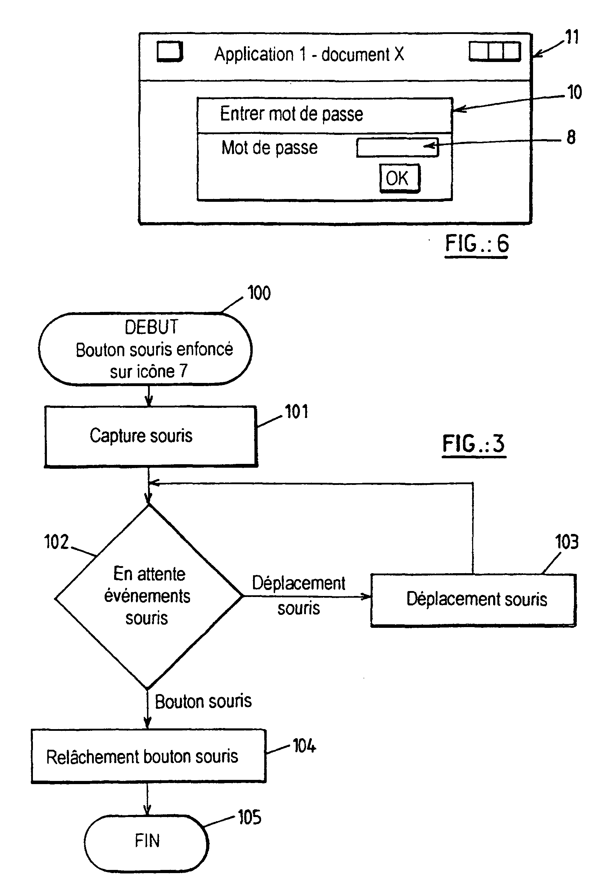

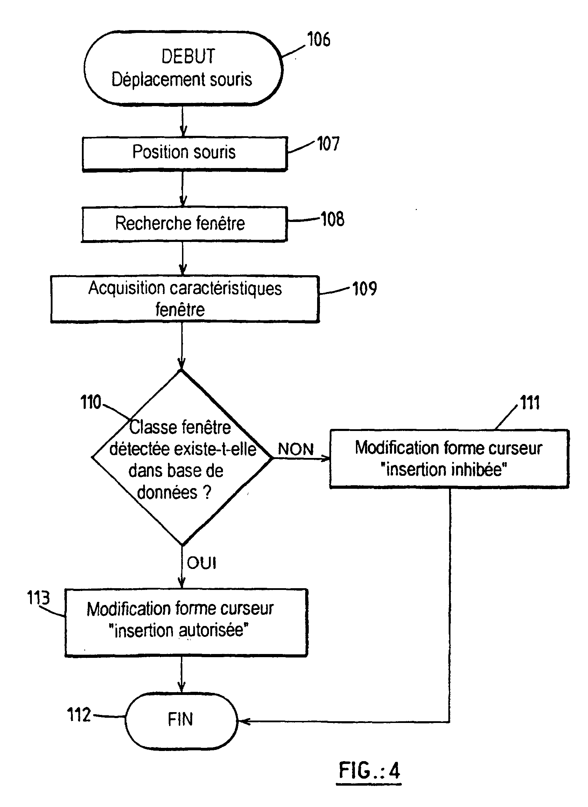

Comme cela sera décrit dans la suite en regard des figures 3 et 4, cette modification de la représentation graphique du curseur 9 est gérée par le logiciel de pilotage d'accès LPA qui, pendant le déplacement du curseur 9, compare en permanence la classe de la fenêtre se trouvant sous le curseur à la classe de la fenêtre de destination dont les caractéristiques sont associées au mot de passe PWD sélectionné dans la carte à puce 5. Le relâchement du bouton gauche 6a de la souris 6, lorsque le curseur 9 est arrivé à la fenêtre 8, a pour effet de commander l'application dans la fenêtre de destination 8 du mot de passe PWD fourni par la carte à puce 5.

Bien entendu, il s'agit là d'un exemple et, d'un point de vue ergonomique, de nombreuses autres possibilités sont envisageables pour introduire dans une fenêtre de destination, au moyen d'un organe de pointage, un mot de passe sélectionné par un utilisateur à partir d'un ensemble de codes d'identification représentatifs de différents mots de passe.

Il doit être compris que les applications 1, 2, 3 et 4 ne sont en rien modifiées et sont des applications standards. Par conséquent, le logiciel résident de pilotage d'accès LPA se substitue à l'introduction du mot de passe au davier par l'utilisateur. Il existe à cet effet plusieurs solutions à la portée de l'homme de l'art. L'une des solutions consiste à simuler l'enfoncement d'une touche du clavier et à envoyer vers la fenêtre de destination un message équivalent à celui généré par le clavier. Selon cette solution, le mot de passe est transmis caractère par caractère à la fenêtre de destination. Une autre des solutions serait de passer par la fonctionnalité de copier/coller offerte par les systèmes d'exploitation (OS) modernes : le mot de passe est copié dans le presse-papiers par le logiciel LPA qui simule ensuite un collage dans l'application cible en lui envoyant le message équivalent à l'ordre de collage. Finalement le logiciel LPA efface le contenu du presse-papiers pour ne pas laisser le mot de passe exposé.

Il résulte de ce qui précède que le mot de passe PWD transmis à partir de la carte à puce 5 au moyen du logiciel de pilotage d'accès LPA apparaît dans la fenêtre de destination 8 sous la même forme que s'il avait été tapé au clavier par l'utilisateur lui-même. Cela signifie que si l'application est conçue pour afficher le mot de passe en clair, celui-ci demeurera affiché en clair dans la fenêtre de destination 8. Cependant, même dans ce cas, la sécurité sera améliorée dans la mesure où l'affichage du mot de passe PWD sera fugace et où, dans le cas d'un mot de passe statique, l'utitisateur n'aura pas à le mémoriser et à prendre le risque de le noter par écrit.

Cependant, dans de nombreux cas, les logiciels d'application sont conçus pour afficher des caractères factices, par exemples des astérisques, à la place des caractères du mot de passe tapé par un utilisateur : dans ce cas, le mot de passe n'apparaîtra jamais en clair et pourra même être totalement inconnu de l'utilisateur, par exemple si ce mot de passe PWD est chargé directement dans sa carte à puce au moyen d'un outil de personnalisation sous la commande d'un administrateur de sécurité.

Le mot de passe utilisé, s'il est statique, peut être fort, c'est à dire long et complexe ( par exemple, succession de caractères aléatoires), ce qui en pratique ne s'avère pas possible avec les solutions conventionnelles nécessitant sa mémorisation par l'utilisateur.

Afin de renforcer encore la sécurité du processus d'authentification vis-à-vis d'une application à accès par mot de passe, ce dernier au lieu d'être statique, peut être dynamique. Comme cela est connu de l'homme de l'art, les mots de passe dynamiques peuvent être du type asynchrone ou synchrone.

Un mot de passe asynchrone suppose qu'une clé secrète est partagée entre l'application et le dispositif de sécurité personnel. L'application génère un aléa qui est transmis au dispositif de sécurité personnel PSD. Celui-ci chiffre cet aléa au moyen de sa clé secrète en mémoire grâce à un algorithme de chiffrement et le mot de passe ainsi calculé est transmis à l'application. Cette dernière assure parallèlement un calcul similaire sur l'aléa et compare le résultat obtenu avec le mot de passe reçu du dispositif de sécurité personnel. S'il y a cohérence, par exemple identité, des mots de passe calculés dans l'application et dans le PSD, l'accès à l'application est autorisé.

Sous réserve que le logiciel de pilotage d'accès LPA soit en mesure de lire l'aléa généré par l'application, le dispositif selon l'invention permet de mettre en oeuvre un tel mécanisme d'authentification par mot de passe asynchrone en assurant, au niveau du logiciel de pilotage d'accès, après lecture de l'aléa, sa transmission au dispositif de sécurité personnel PSD puis, comme décrit précédemment, l'application du mot de passe calculé dans la fenêtre de destination.

Les mots de passe synchrones sont des mots de passe qui varient dans le temps, de préférence à chaque utilisation, par exemple en fonction d'une base de temps et/ou d'un compteur d'événements. Les mots de passe, ou les clés et variables permettant de le calculer, évoluent de manière synchrone dans le dispositif de sécurité personnel PSD et dans l'application. Ces mécanismes sont bien connus de l'homme de l'art et ne seront pas décrits ici plus en détail. On pourra cependant se référer à la demande de brevet internationale WO 99/18546 déposée le 1er Octobre 1998 qui décrit des mécanismes permettant de mettre en oeuvre une authentification par un mot de passe dynamique basé sur le temps au moyen d'une carte à puce, malgré l'absence d'une source d'alimentation électrique et, par conséquent d'une horloge, dans une telle carte.

Dans l'exemple de réalisation décrit en regard des figures 2A et 2B, il a été supposé que l'utilisateur choisissait dans un menu, au moyen du curseur 9, le code correspondant au mot de passe PWD qui convient pour l'application à laquelle il veut accéder.

La description qui va suivre, en regard des figures 3 à 6, vise un deuxième mode de réalisation dans lequel l'utilisateur n'a pas à sélectionner le mot de passe approprié, cette sélection étant faite automatiquement par le logiciel de pilotage d'accès LPA.

La figure 3 illustre le processus global de gestion de la souris 6 assuré par le logiciel de pilotage d'accès LPA. Le processus débute à l'étape 100 lorsque le bouton gauche 6a de la souris est enfoncé alors que le curseur 9 se trouve au dessus de l'icône 7. L'étape 101 correspond à une capture de l'état de la souris et l'étape 102 à une attente des événements susceptibles d'être générés part la souris : il peut s'agir d'un déplacement de la souris ou d'un relâchement du bouton gauche de la souris.

Si l'événement détecté est un déplacement de la souris, on passe à l'étape 103 correspondant au sous-programme illustré par l'organigramme de la figure 4.

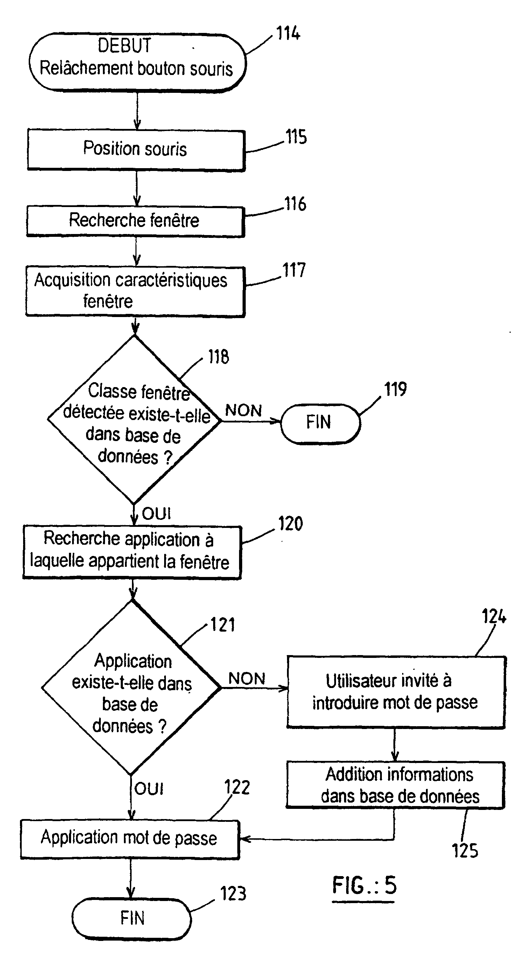

Si l'événement détecté par le logiciel de pilotage de pilotage d'accès concerne le bouton gauche de la souris, on passe à l'étape 104 correspondant au sous-programme illustré par l'organigramme de la figure 5. L'étape 105 marque la fin de ce programme général.

Le sous-programme de la figure 4 débute en 106 lorsqu'un déplacement de la souris est détecté. A l'étape 107, la position de la souris est acquise. A l'étape 108, la fenêtre qui se trouve sous le curseur 9 est recherchée. L'étape 109 correspond à l'acquisition de données caractéristiques de la fenêtre se trouvant sous le curseur, en particulier la classe de cette fenêtre.

En 110, il est recherché si la classe de la fenêtre se trouvant sous le curseur correspond à une classe de fenêtre mémorisée dans la carte à puce 5. Dans la négative, la représentation graphique du curseur 9 est modifiée en 111 pour avertir l'utilisateur qu'à ce stade la fonction d'introduction du mot de passe PWD est inhibée, c'est-à-dire que le relâchement du bouton gauche 6a de la souris ne produira aucun effet. Le sous-programme passe ensuite à l'étape fin 112. Toutefois, tant que la souris 6 est déplacée, le sous-programme de la figure 4 est relancé comme cela ressort de l'organigramme de la figure 3.

Si la réponse au test 110 est positive, c'est-à-dire si la fenêtre se trouvant sous le curseur appartient à une classe contenue dans la mémoire de la carte à puce 5, il est procédé en 113 à une modification de l'aspect graphique du curseur (celui-ci retrouve la forme de flèche qu'il a lorsqu'il atteint la fenêtre 8 à la figure 2) indiquant à l'utilisateur que l'insertion du mot de passe PWD se trouve alors autorisée.

Lorsque, à l'étape 102 de la figure 3 l'événement détecté est un relâchement du bouton gauche de la souris, le sous-programme 104 illustré par l'organigramme de la figure 5 est exécuté.

L'étape 114 de la figure 5 correspond à la détection du relâchement du bouton gauche de la souris. La position de la souris est acquise en 115 et la fenêtre se trouvant sous le curseur est recherchée en 116. En 117, il est procédé à l'acquisition des données caractéristiques de cette fenêtre, en particulier de sa classe.

L'étape 118 est un test visant à déterminer si la fenêtre se trouvant sous le curseur 9 appartient à une classe mémorisée dans la carte à puce 5. Dans la négative, le sous programme se termine en 119.

Dans l'affirmative, il est recherché en 120 à quelle application la fenêtre appartient. L'étape 121 est un test visant à déterminer si l'application identifiée correspond à une application dont les données d'identification sont contenues dans la carte à puce 5. Dans l'affirmative, le mot de passe associé dans la carte à puce 5 à l'application identifiée est appliqué dans la fenêtre dans laquelle se trouve alors le curseur, puis le sous-programme se termine en 123.

Si la réponse au test 121 est négative, l'utilisateur est invité en 124 à introduire manuellement, par l'intermédiaire du clavier de son ordinateur personnel, le mot de passe requis (cas d'un mot de passe statique). En 125, ce mot de passe, ainsi que les données d'identification de l'application et les caractéristiques de la fenêtre détectée acquises en 117 et 120, sont transmis à la carte à puce 5 dans laquelle ils sont mémorisés. Le sous-programme revient alors à l'étape 122 donnant lieu à l'introduction, dans la fenêtre de destination, du mot de passe introduit au clavier par l'utilisateur et mémorisé dans la carte à puce 5.

La figure 6 est une représentation schématique d'une page d'accueil d'une application permettant d'expliciter les informations qui sont collectées lors du déroulement des sous-programmes des figures 4 et 5.

Dans cette page d'accueil, la fenêtre de destination 8, dans laquelle le mot de passe PWD doit être inséré, est généralement un champ d'entrée de données. Cette fenêtre est caractérisée par sa classe et ses attributs spécifiques, par exemple un attribut caractéristique d'une fenêtre de mot de passe.

La référence 10 désigne une boîte de dialogue dans laquelle se trouve la fenêtre de destination. Cette boîte de dialogue est notamment caractérisée par le titre de la fenêtre affiché dans la barre de titre de la boîte de dialogue, par exemple sous la forme "entrer mot de passe".

Enfin, la fenêtre principale de l'application, c'est-à-dire la fenêtre de l'application cible, est notamment caractérisée par la classe de la fenêtre et par le titre de la fenêtre apparaissant en 11. Ce titre est généralement constitué par la concaténation du nom de l'application et du nom du document ouvert dans l'application, du nom de fichier d'un fichier texte ou de l'adresse d'une page web par exemple.

Aux étapes 109, 117 ou 120 des sous-programmes des figures 4 et 5 , ces informations sont utilisées comme décrit précédemment pour déterminer si l'insertion d'un mot de passe est autorisée ou non.

Lorsque l'accès à une application est conditionné par la fourniture de plusieurs données accréditives, par exemple un nom d'utilisateur ("login name") et un mot de passe ("password"), le logiciel de pilotage d'accès LPA est agencé pour rechercher :
- si la fenêtre de destination dans laquelle l'utilisateur a relâché le bouton de la souris 6 est celle devant recevoir le nom d'utilisateur ou celle devant recevoir le mot de passe ;
- une autre fenêtre voisine appartenant à la même boîte de dialogue, qui recevra le nom d'utilisateur ou le mot de passe selon le résultat de l'étape précédente.

La discrimination entre fenêtre pour nom d'utilisateur et fenêtre pour mot de passe est réalisée en examinant si la fenêtre considérée est dotée de l'attribut "Mot de passe", à savoir que cette fenêtre est prévue pour masquer ce qui est saisi en affichant des astérisques.

La recherche de la deuxième fenêtre se fait en recherchant la parente de la première puis en énumérant toutes les fenêtres filles de cette parente jusqu'à trouver une fenêtre ayant les caractéristiques souhaitées. Toutefois, dans certains cas, cette solution peut ne pas fonctionner (boîte de dialogue avec plus de deux fenêtres de saisie, attribut "mot de passe" non utilisé.....).

Une autre solution consiste à procéder à une initialisation par l'utilisateur : lors du premier "lâché" dans une boîte de dialogue "inconnue" d'une application, le logiciel LPA guide l'utilisateur sur la marche à suivre, c'est-à-dire qu'un fac similé de la boîte de dialogue cible avec ses différentes fenêtres d'entrée potentielles, la liste des mots de passe (sous forme de leurs codes P1, P2....) et des noms d'utilisateur déjà présents dans la carte, et la possibilité d'en ajouter de nouveaux sont présentés à l'utilisateur.

L'utilisateur fait le lien entre les mots de passe et les noms d'utilisateur en indiquant, par exemple au moyen de la souris, quelle donnée accréditive (nom d'utilisateur ou mot de passe) doit être introduite dans la fenêtre. Toutes ces informations sont mémorisées dans la carte à puce pour être réutilisées ultérieurement lors de demandes d'authentification vis-à-vis de l'application considérée.

Il va de soi que les modes de réalisation décrits ne sont que des exemples et l'on pourrait les modifier, notamment par substitution d'équivalents techniques, sans sortir pour cela du cadre de l'invention.

C'est ainsi, par exemple, que dans le cas d'un mot de passe statique, celui-ci peut être stocké dans la mémoire M du dispositif de sécurité personnel PSD sous forme chiffrée et/ou sous forme d'une donnée secrète permettant de calculer le mot de passe proprement dit. Dans ce cas, le dispositif de sécurité personnel PSD comporte des moyens d'exécution d'un ou plusieurs algorithmes permettant de calculer le mot de passe statique proprement dit qui sera fourni à l'ordinateur personnel.

D'autre part, le dispositif décrit ci-dessus peut être appliqué également à l'introduction de données accréditives, telles que numéro de carte de crédit et date d'expiration, numéro de compte bancaire, etc., nécessaires à l'accès à un service ou logiciel, ou à l'exécution d'un logiciel, que l'accès proprement dit à celui-ci soit ou non commandé par l'introduction de données accréditives d'accès (mot de passe, nom d'utilisateur, etc.).

## Revendications

1. Dispositif informatique comprenant :
- des moyens de traitement de données (3) pour la mise en oeuvre d'au moins l'une des fonctions comprenant l'accès à un logiciel, l'exécution d'un logiciel et l'accès à un service,
- des premiers moyens de mémorisation de données et de programmes (3),
- des moyens d'interface avec un utilisateur comportant au moins un écran d'affichage (2) et des moyens d'interface graphique, la mise en oeuvre de ladite fonction requérant l'application d'au moins une donnée accréditive en réponse à l'affichage d'une requête sur ledit écran,
- un dispositif de sécurité personnel (5) comportant des moyens de fourniture (M) pour la délivrance de ladite donnée accréditive,
- et des moyens (LPA) de pilotage de ladite fonction comportant des moyens d'affichage pour afficher ladite requête (10) sur ledit écran,
**caractérisé en ce que** lesdits moyens d'affichage sont adaptés pour afficher simultanément sur ledit écran ladite requête (10) et au moins un signe (7) représentatif du dispositif personnel de sécurité (5),
lesdits moyens (LPA) de pilotage comportant en outre :
- des moyens d'acquisition (100) pour commander, au moyen d'un organe de pointage (6), par positionnement sur ledit signe d'un curseur (9) déplaçable sur ledit écran au moyen dudit organe de pointage, l'acquisition de ladite donnée accréditive dans lesdits moyens de fourniture (M), et
- des moyens d'application (122) pour commander, au moyen dudit organe de pointage, ladite application de ladite donnée accréditive à ladite fonction dans une position requise dudit curseur.

2. Dispositif selon la revendication 1, dans lequel ledit logiciel est du type à affichage par fenêtres et comprend une fenêtre de destination (8) pour l'application de ladite donnée accréditive, **caractérisé en ce que** lesdits moyens de pilotage comprennent en outre :
- des premiers moyens (109, 117) d'identification de données caractéristiques de la fenêtre se trouvant sous ledit curseur (9) au cours de son déplacement sur ledit écran,
- des premiers moyens de comparaison (110, 118) pour comparer les données caractéristiques de ladite fenêtre se trouvant sous le curseur avec des données caractéristiques de ladite fenêtre de destination (8) stockées dans lesdits moyens de fourniture (M) en liaison avec ladite donnée accréditive, et
- des moyens (113) pour autoriser ladite application de ladite donnée accréditive en réponse à une cohérence entre lesdites données caractéristiques identifiées et lesdites données caractéristiques stockées dans lesdits moyens de fourniture (M).

3. Dispositif selon la revendication 2, **caractérisé en ce qu'**il comprend plusieurs logiciels et plusieurs données accréditives (PWD1, PWD2,...) distinctes commandant respectivement l'accès auxdits logiciels, **en ce qu'**à chacune desdites données accréditives est associée dans lesdits moyens de fourniture une donnée d'identification du logiciel correspondant (Application 1, ...), **en ce que** lesdits moyens d'affichage sont adaptés pour afficher sur ledit écran une pluralité de signes (P1 , P2 , ...) représentatifs respectivement desdites données accréditives, et **en ce que** lesdits moyens de pilotage comprennent en outre :
- des seconds moyens (120) d'identification d'un logiciel dont ladite fenêtre de destination (8) est affichée sur ledit écran, et
- des seconds moyens de comparaison (121) pour comparer l'identité dudit logiciel identifié avec la donnée d'identification associée à une donnée accréditive sélectionnée au moyen dudit organe de pointage, lesdits moyens de comparaison n'autorisant l'application audit logiciel identifié de ladite donnée accréditive sélectionnée que s'il y a identité dudit logiciel identifié avec ladite donnée d'identification.

4. Dispositif selon la revendication 2, **caractérisé en ce qu'**il comprend plusieurs logiciels et plusieurs données accréditives (PWD1, PWD2, ...) distinctes commandant respectivement l'accès auxdits logiciels, **en ce qu'**à chacune desdites données accréditives est associée dans lesdits moyens de fourniture une donnée d'identification du logiciel correspondant (Application 1, ...), et **en ce que** lesdits moyens de pilotage comprennent en outre :
- des seconds moyens (120) d'identification d'un logiciel dont ladite fenêtre de destination (7) est affichée sur ledit écran, et
- des seconds moyens de comparaison (121) pour comparer l'identité dudit logiciel détecté avec lesdites données d'identification stockées dans lesdits moyens de fourniture (M),
- lesdits moyens d'application (121) étant adaptés pour commander l'application dans ladite fenêtre de destination d'une donnée accréditive présente dans lesdits moyens de fourniture (M) et dont la donnée d'identification associée correspond à l'identité dudit logiciel détecté.

5. Dispositif selon la revendication 4, **caractérisé en ce qu'**il comprend des moyens (124, 125) pour, en l'absence d'une correspondance entre lesdites données d'identification et ledit logiciel détecté, autoriser l'introduction par ledit utilisateur, via lesdits moyens d'interface, d'une donnée accréditive pour ledit logiciel détecté et stocker dans lesdits moyens de fourniture ladite donnée accréditive introduite avec des données d'identification dudit logiciel détecté.

6. Dispositif selon l'une quelconque des revendications 1 à 5, **caractérisé en ce qu'**il comprend un ordinateur personnel (1) auquel est connecté ledit dispositif personnel de sécurité (5).

7. Dispositif selon la revendication 6, **caractérisé en ce que** ledit logiciel (Application 1, ...) est un logiciel d'application réparti entre l'ordinateur personnel et un serveur, ledit dispositif comportant des moyens de connexion dudit ordinateur personnel audit serveur.

8. Dispositif selon l'une quelconque des revendications 1 à 7, **caractérisé en ce que** ledit dispositif de sécurité personnel est une carte à puce (5).

9. Dispositif selon l'une quelconque des revendications 1 à 8, **caractérisé en ce que** ledit dispositif de sécurité personnel (5) comprend des moyens de comparaison d'un code secret (PIN) mémorisé dans ledit dispositif avec un code secret introduit par l'utilisateur via lesdits moyens d'interface, lesdits moyens de pilotage étant rendus opérationnels en réponse à une cohérence entre lesdits codes secrets.

10. Dispositif selon l'une quelconque des revendications 1 à 9, **caractérisé en ce que** lesdits moyens de pilotage comprennent des moyens pour interdire l'affichage de ladite donnée accréditive sur ledit écran d'affichage en réponse à son application audit logiciel.

11. Dispositif selon l'une quelconque des revendications 1 à 10 dans lequel ladite donnée accréditive est statique, **caractérisé en ce que** lesdits moyens de fourniture (M) sont des moyens de mémorisation.

12. Dispositif selon l'une quelconque des revendications 1 à 11 dans lequel ladite donnée accréditive est dynamique, **caractérisé en ce que** lesdits moyens de fourniture (M) comprennent des moyens d'exécution d'un algorithme de calcul de ladite donnée accréditive.

## Claims

1. A data processing system including:
- data processing means (3) for implementing at least one of the following functions: access to a program, execution of a program and access to a service,
- first memory means (3) for storing data and programs,
- user interface means including at least one display screen (2) and graphical interface means, wherein the implementation of said function requires the application of at least one credential in response to the display of a request on said screen,
- a personal security device (5) comprising supply means (M) for delivering said credential and
- control means (LPA) for controlling said function comprising display means for displaying said request (10) on said screen,
**characterized in that** said display means are adapted to display simultaneously on said screen said request (10) and at least one sign (7) representative of said personal security device (5),
wherein said control means (LPA) further comprise,
- acquisition means (100) for controlling the acquisition of said credential in said supply means (M) by means of said pointing device (6) by positioning a moveable cursor (9) on said sign by means of said pointing device, and
- application means (122) for controlling said application of said credential to said function in a required position of said cursor, by means of said pointing device.

2. A system according to claim 1, wherein said program is of the windows display type and comprises a destination window (8) for the application of said credential, **characterized in that** said control means further comprise:
- first identifying means (109, 117) for identifying data characteristic of the window under said cursor (9) while it is moving on said screen,
- first comparison means (110, 118) for comparing the data characteristic of said window under the cursor with characteristic data of said destination window (8) stored in said supply means (M) in relationship with said credential, and
- authorization means (113) for authorizing said application of said credential in response to a match between said identified characteristic data and said characteristic data stored in said supply means (M).

3. A system according to claim 2, **characterized in that** it includes a plurality of programs and a plurality of separate credentials (PWD1, PWD2, ...) controlling access respectively to said programs, **in that** each of said credentials is associated in said supply means with data identifying a corresponding one of said programs (Application 1, ...), **in that** said display means are adapted to display on said screen a plurality of signs (P1, P2, ...) respectively representing said credentials, and **in that** said control means further include:
- second identifying means (120) for identifying one of said programs whose destination window (8) is displayed on said screen, and
- second comparison means (121) for comparing the identity of said one identified program with one of said identification data associated with one of said credentials selected by means of said pointing device, said comparison means authorizing application of said one selected credentials to said one identified program only if said one identified program and said one identification data match.

4. A device according to claim 2, **characterized in that** it includes a plurality of programs and a plurality of separate credentials (PWD1, PWD2, ...) controlling access respectively to said programs, **in that** each of said credentials is associated in said supply means with data identifying a corresponding one of said programs, and said control means further comprise:
- second identifying means (120) for identifying one of said programs whose destination window (7) is displayed on said screen, and
- second comparison means (121) for comparing the identity of said one identified program with said identification data stored in said supply means (M),
- said application means (121) being adapted to control the application in said destination window of one of said credentials present in said supply means (M) and whose associated identification data corresponds to the identity of said identified program.

5. A system according to claim 4, **characterized in that** it includes means (124, 125) for authorizing entry of a credential for said identified program by said user via said interface means and for storing of said entered credential with identification data of said identified program in said supply means if there is no match between said identification data stored in said supply means and said identified program.

6. A system according to any of claims 1 to 5, **characterized in that** it includes a personal computer (1) to which said personal security device (5) is connected.

7. A system according to claim 6, **characterized in that** said program (Application 1, ...) is an application program distributed between said personal computer and a server, wherein said system includes connecting means for connecting said personal computer to said server.

8. A system according to any of claims 1 to 7, **characterized in that** said personal security device is an IC card (5).

9. A system according to any of claims 1 to 8, **characterized in that** said personal security device (5) includes code comparison means for comparing a secret code (PIN) stored in said system with a secret code entered by said user via said interface means, wherein said control means are rendered operational in response to a match between said secret codes.

10. A system according to any of claims 1 to 9, **characterized in that** said control means include means for preventing display of said credential on said display screen in response to its application to said program.

11. A system according to any of claims 1 to 10, wherein said credential is static and **characterized in that** said supply means (M) are memory means.

12. A system according to any of claims 1 to 11, wherein said credential is dynamic and **characterized in that** said supply means (M) include means for executing an algorithm for computing said credential.

## Patentansprüche

1. Informatikvorrichtung mit:
- Datenverarbeitungsmitteln (3) zur Umsetzung von wenigstens einer der folgenden Funktionen: Zugang zu einer Software, Ausführung einer Software und Zugang zu einem Dienst,
- erste Mittel zur Speicherung von Daten und Programmen (3).
- Mittel zur Bildung einer Schnittstelle mit einem Benutzer, welche wenigstens einen Anzeigebildschirm (2) und graphische Schnittstellenmittel aufweisen, wobei die Umsetzung der Funktion die Anwendung von wenigstens einem Akkreditierungsdatum in Reaktion auf die Anzeige einer Anfrage auf dem Bildschirm erfordert,
- eine persönliche Sicherungsvorrichtung (5) mit Lieferungsmitteln (M) für die Abgabe des Akkreditierungsdatums,
- und Mitteln (LPA) zur Steuerung der Funktion, welche Anzeigemittel zum Anzeigen der Anfrage (10) auf dem Bildschirm aufweisen,
**dadurch gekennzeichnet, dass** die Anzeigemittel dazu ausgestaltet sind, gleichzeitig auf dem Bildschirm die Anfrage (10) und wenigstens ein Symbol (7) anzuzeigen, welches für die persönliche Sicherheitsvorrichtung (5) steht,
wobei die Mittel (LPA) zur Steuerung unter anderem aufweisen:
- Erfassungsmittel (100) zum Steuern der Erfassung des Akkreditierungsdatums in den Lieferungsmitteln (M) mittels eines Zeigeorgans (6) durch Positionierung eines auf dem Bildschirm verschiebbaren Cursors (9) auf dem Symbol mittels des Zeigeorgans, und
- Anwendungsmittel (122) zum Steuern der Anwendung des Akkreditierungsdatums auf die Funktion an einer geforderten Position des Cursors mittels des Zeigeorgans.

2. Vorrichtung nach Anspruch 1, wobei die Software eine Fenster basierte Anzeige hat und ein Zielfenster (8) zur Anwendung des Akkreditierungsdatums enthält, **dadurch gekennzeichnet, dass** die Steuerungsmittel außerdem enthalten:
- erste Mittel (109, 117) zur Identifizierung der Kenndaten eines Fensters, welche sich im Laufe der Verschiebung des Cursors (9) auf dem Bildschirm unter dem Cursor befindet,
- erste Vergleichermittel (110, 118) zum Vergleichen der Kenndaten des unter dem Cursor angeordneten Fensters mit den Kenndaten des Zielfensters (8), die in den Lieferungsmitteln (M) in Verbindung mit dem Akkreditierungsdatum gespeichert sind und
- Mittel (113) zum Freigeben der Anwendung des Akkreditierungsdatums in Reaktion auf eine Übereinstimmung zwischen den identifizierten Kenndaten und den in den Lieferungsmitteln (M) gespeicherten Kenndaten.

3. Vorrichtung nach Anspruch 2, **dadurch gekennzeichnet, dass** sie mehrere Softwareprodukte und mehrere unterschiedliche Akkreditierungsdaten (PWD1, PWD2, ...) enthält, die jeweils den Zugang zu einem Softwareprodukt dadurch regeln, dass jedem Akkreditierungsdatum in den Lieferungsmitteln ein Identifizierungsdatum der entsprechenden Software (Anwendung 1 ...) zugeordnet ist, dass die Anzeigemittel dazu eingerichtet sind, auf dem Bildschirm mehrere Symbole (P1, P2, ...) anzuzeigen, die jeweils für die Akkreditierungsdaten stehen, und dass die Steuerungsmittel außerdem enthalten:
- zweite Mittel (120) zur Identifizierung einer Software, deren Zielfenster (8) auf dem Bildschirm angezeigt ist, und
- zweite Vergleichermittel (121) zum Vergleichen der Identität der identifizierten Software mit dem Identifizierungsdatum, das einem mittels des Zeigeorgans ausgewählten Akkreditierungsdatum zugeordnet ist, wobei die Vergleichermittel die Anwendung des ausgewählten Akkreditierungsdatums auf die identifizierte Software nur freigeben, wenn eine Identität zwischen der identifizierten Software und dem Identifizierungsdatum besteht.

4. Vorrichtung nach Anspruch 2, **dadurch gekennzeichnet, dass** sie mehrere Softwareprodukte und mehrere unterschiedliche Akkreditierungsdaten (PWD1, PWD2, ...) enthält, die jeweils den Zugang zu einem Softwareprodukt dadurch regeln, dass jedem Akkreditierungsdatum in den Lieferungsmitteln ein Identifizierungsdatum der entsprechenden Software (Anwendung 1 ...) zugeordnet ist und dass die Steuerungsmittel außerdem enthalten:
- zweite Mittel (120) zur Identifizierung einer Software, deren Zielfenster (7) auf den Bildschirm angezeigt ist, und
- zweite Vergleichermittel (121) zum Vergleichen der Identität der detektierten Software mit den in den Lieferungsmitteln (M) gespeicherten Identifikationsdaten,
wobei die Anwendungsmittel (121) dazu eingerichtet sind, die Anwendung eines in den Lieferungsmitteln (M) vorhandenen Akkreditierungsdatums auf das Zielfenster zu steuern, deren zugeordnete Identifikationsdaten der Identität der detektierten Software entsprechen.

5. Vorrichtung nach Anspruch 4, **dadurch gekennzeichnet, dass** sie Mittel (124, 125) zum Freigeben der Einführung eines Akkreditierungsdatums für die detektierte Software durch den Benutzer über die Schnittstellenmittel bei Fehlen einer Übereinstimmung zwischen den Identifizierungsdaten und der detektierten Software und zum Speichern des eingeführten Akkreditierungsdatums in den Lieferungsmitteln mit Identifizierungsdaten der detektierten Software enthält.

6. Vorrichtung nach einem der Ansprüche 1 bis 5, **dadurch gekennzeichnet, dass** sie einen Personalcomputer (1) enthält, mit dem die persönliche Sicherheitsvorrichtung (5) verbunden ist.

7. Vorrichtung nach Anspruch 6, **dadurch gekennzeichnet, dass** die Software (Anwendung 1, ...) eine Anwendungssoftware ist, die zwischen dem Personalcomputer und einem Server verteilt ist, wobei die Vorrichtung Mittel zur Verbindung des Personalcomputers mit dem Server enthält.

8. Vorrichtung nach einem der Ansprüche 1 bis 7, **dadurch gekennzeichnet, dass** die persönliche Sicherheitsvorrichtung eine Chip-Karte (5) ist.

9. Vorrichtung nach einem der Ansprüche 1 bis 8, **dadurch gekennzeichnet, dass** die persönliche Sicherheitsvorrichtung (5) Mittel zum Vergleichen eines geheimen in der Vorrichtung gespeicherten Codes (PIN) mit einem durch den Benutzer über die Schnittstellenmittel eingeführten geheimen Code enthält, wobei die Steuerungsmittel in Reaktion auf eine Übereinstimmung zwischen den geheimen Codes zum Einsatz kommen.

10. Vorrichtung nach einem der Ansprüche 1 bis 9, **dadurch gekennzeichnet, dass** die Steuerungsmittel Mittel zum Verhindern der Anzeige des Akkreditierungsdatums auf dem Anzeigebildschirm in Reaktion auf ihre Anwendung auf die Software enthält.

11. Vorrichtung nach einem der Ansprüche 1 bis 10, wobei das Akkreditierungsdatum statisch ist, **dadurch gekennzeichnet, dass** die Lieferungsmittel (M) Speichermittel sind.

12. Vorrichtung nach einem der Ansprüche 1 bis 11, wobei das Akkreditierungsdatum dynamisch ist, **dadurch gekennzeichnet, dass** die Lieferungsmittel (M) Mittel zur Ausführung eines Algorithmus zur Berechnung des Akkreditierungsdatums enthalten.
